(19) Europäisches Patentamt
European Patent Office
Office européen des brevets

(11) EP 1 736 493 B1

(12) **EUROPÄISCHE PATENTSCHRIFT**

(45) Veröffentlichungstag und Bekanntmachung des Hinweises auf die Patenterteilung:
**25.03.2009 Patentblatt 2009/13**

(51) Int Cl.:
*C08G 59/18* (2006.01) *C08G 59/56* (2006.01)
*C08L 63/00* (2006.01) *C09D 163/00* (2006.01)

(21) Anmeldenummer: **06012237.1**

(22) Anmeldetag: **14.06.2006**

(54) **Härter für Überzugmassen (II)**

Curing agent for coating compositions (II)

Agent réticulant pour compositions de revêtement (II)

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.06.2005 DE 10529144**

(43) Veröffentlichungstag der Anmeldung:
**27.12.2006 Patentblatt 2006/52**

(73) Patentinhaber: **Cognis IP Management GmbH**
**40589 Düsseldorf (DE)**

(72) Erfinder:
- **Sabbadini, Giorgio**
**20017 Rho (IT)**
- **Roloff, Thorsten**
**40597 Düsseldorf (DE)**
- **Birnbrich, Paul**
**42719 Solingen (DE)**
- **Thomas, Hans-Josef**
**41352 Korschenbroich (DE)**

(56) Entgegenhaltungen:
**EP-A- 1 518 875**
**WO-A-97/31962**
**US-A- 4 608 405**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 736 493 B1

## Beschreibung

### Gebiet der Erfindung

Die Erfindung betrifft Überzugsmassen mit geringerer Schrumpfungsneigung. Diese Überzugsmassen sind erhältlich durch Umsetzung von Epoxidharzen und speziellen erfindungsgemäßen Härtern, wobei diese Härter erhältlich sind, indem eine Mischung von epoxidiertem Polyalkylenoxid, einer epoxidierten aromatischen Hydroxyverbindung und einer aromatischen Hydroxyverbindung zu einem ersten Zwischenprodukt umsetzt, dieses Zwischenprodukt anschließend mit einem Polyamin zu einem zweiten Zwischenprodukt umsetzt und dieses schließlich mit carbonylhaltigen Verbindungen spezieller Struktur umsetzt.

### Stand der Technik

US-A-4,608,405 beschreibt Härter für Epoxidharze. Diese Härter werden wie folgt hergestellt: Man setzt eine erste Zwischenverbindung, eine Diepoxidverbindung (a), die erhältlich ist durch Umsetzung von Diglycidylethern zweibasischer Phenole, Diglycidylethern aliphatischer Dihydroxy-Polyether und zweibasischen Phenolen mit einem Polyamin (b), das primäre Aminogruppen enthält zu einer zweiten Zwischenverbindung um, wobei die Maßgabe gilt, daß praktisch alle in (a) vorhandenen Epoxidgruppen praktisch quantitativ mit dem Polyamin (b) umgesetzt werden.
Anschließend wird die erhaltene zweite Zwischenverbindung mit einer Verbindung (c) aus der Gruppe der Monoepoxide oder Monocarbonsäuren umgesetzt, wobei die Maßgabe gilt, daß mindestens alle primären Aminogruppen der Polyamine (b) mit den Verbindungen (c) umgesetzt werden, wobei eine dritte Zwischenverbindung entsteht, die schließlich durch Zugabe einer flüchtigen Säure wie Ameisen-, Essig- oder Propionsäure in eine ionische Verbindung überführt wird. Diese letztgenannte ionische Verbingung stellt gemäß der Offenbarung der US-A-4,608,405 einen Härter für wasserbasierte Epoxidharzsysteme dar.

WO 93/21250 beschreibt ein Verfahren zur Herstellung von wässrigen Emulsionen von Epoxidharzhärtern, die freie Aminogruppen enthalte. Diese Epoxidharzhärter soind ihrerseits Addukte von Epoxidharzen und Aminogruppen enthaltenden Verbindungen.

EP-A-253,405 beschreibt Zusammensetzungen enthaltend kationische Epoxidharze. Diese werden hergestellt, indem man eine Komponente (a) enthaltend einen Diglycidylether eines Polyols und einen Diglycidylether eines zweibasischen Phenols mit einem zweibasischen Phenol (b) und gegebenenfalls einem Kappungsmittel (c) umsetzt, wobei ein Epoxidharz mit terminalen Oriranringen entsteht. Diese terminalen Oxiranringe werden dann in kationische Gruppen überführt, indem man mit Nucleophilen umsetzt und während des Prozesses eine organische Säure und Wasser zugibt.

EP-A-1,518,875 beschreibt Härter für wasserbasierte Epoxidharzsysteme, wobei diese Härter erhältlich sind, indem man eine Mischung von (a) mindestens einem epoxidierten Polyalkylenoxid, ausgewählt aus der Gruppe der epoxidierten Polyethylenoxide, der epoxidierten Polypropylenoxide und der Polyethylenpropylenoxide, (b) mindestens einer epoxidierten aromatischen Hydroxyverbindung ausgewählt aus der Gruppe der Bisphenol-A-Epoxide und der Bisphenol-F-Epoxide und (c) mindestens einer aromatischen Hydroxyverbindung, ausgewählt aus der Gruppe Bisphenol-A und Bisphenol-F zu einem Zwischenprodukt umsetzt und dieses Zwischenprodukt anschließend mit einem Polyamin (E) umsetzt.

### Beschreibung der Erfindung

Aufgabe der vorliegenden Erfindung war es, Härter für wasserbasierte Epoxidharzsysteme bereitzustellen, bei deren Einsatz bei der Umsetzung mit Epoxidharzen Überzugsmassen bzw. Beschichtungen entstehen, die sich durch eine vergleichsweise lange Verarbeitungszeit, der sogenannten Topfzeit, auszeichnen. Dabei sollte das Ende der Verarbeitungszeit an einen deutlichen Viskositätsanstieg der Mischung erkennbar sein. Darüber hinaus sollten diese Härter die Eigenschaft haben, in Wasser selbstemulgierend zu sein.
Eine weitere Aufgabe war es, daß diese Härter in Wasser bzw. wässrigen Systemen zugesetzte flüssige Epoxidharze emulgieren können sollten. Eine weitere Aufgabe war es, Härter für wasserbasierte Epoxidharzsysteme zur Verfügung zu stellen, bei deren Einsatz bei der Umsetzung mit Epoxidharzen Überzugsmassen bzw. Beschichtungen entstehen, die sich durch eine besonders geringe Schrumpfungsneigung auszeichnen. Eine weitere Aufgabe war es, Härter für wasserbasierte Epoxidharzsysteme bereitzustellen, die nach kurzer Trocknungszeit eine deutliche Härteentwicklung zeigen.

Überraschenderweise wurde nun gefunden, daß Überzugsmassen, die erhältlich sind durch Umsetzung von Epoxidharzen und speziellen Härtern, wobei diese Härter erhältlich sind, indem man eine Mischung von epoxidierten Polyalkylenoxiden, epoxidierten aromatischen Hydroxyverbindungen und aromatischen Hydroxyverbindungen zu einem ersten Zwischenprodukt umsetzt, dieses Zwischenprodukt anschließend mit Polyamin zu einem zweiten Zwischenprodukt umsetzt, und dieses schließlich mit carbonylhaltigen Verbindungen umsetzt, diese Anforderungen in ausgezeichneter Weise erfüllen.

Gegenstand der Erfindung sind zunächst Härter für wasserbasierte Epoxidharzsysteme, wobei diese Härter erhältlich sind, indem man eine Mischung von

(A) mindestens einem epoxidierten Polyalkylenoxid, ausgewählt aus der Gruppe der epoxidierten Polyethylenoxide, der epoxidierten Polypropylenoxide und der Polyethylenpropylenoxide,
(B) mindestens einer epoxidierten aromatischen Hydroxyverbindung ausgewählt aus der Gruppe der Bisphenol-A-Epoxide und der Bisphenol-F-Epoxide und
(C) mindestens einer aromatischen Hydroxyverbindung, ausgewählt aus der Gruppe Bisphenol-A und Bisphenol-F zu einem ersten Zwischenprodukt (Z1) umsetzt, dieses Zwischenprodukt (Z1) anschließend mit einem Polyamin (E) zu einem zweiten Zwischenprodukt (Z2) umsetzt und dieses Zwischenprodukt (Z2) schließlich mit mindestens einer Verbindung (F) umsetzt, mit der Maßgabe, daß die Verbindungen (F) ausgewählt werden aus der Gruppe der carbonylhaltigen Verbindungen der allgemeinen Formel (I)

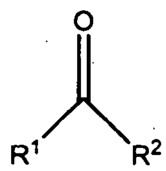

(I)

worin die Reste $R^1$ und $R^2$ unabhängig voneinander Wasserstoff, einen gesättigten Alkylrest mit 1 bis 22 C-Atomen, der linear oder verzweigt sein kann oder eine Gruppe $C_6H_5$, OH, $OR^3$, wobei der Rest $R^3$ ein Alkylrest mit 1 bis 22 C-Atomen ist, der gesättigt oder ungesättigt, linear oder verzweigt sein kann, bedeuten und der weiteren Maßgabe, daß man mindestens 1% und höchstens 99% der in dem Zwischenprodukt (Z2) vorhandenen primären Amingruppen abreagieren lässt.

Im Hinblick auf die ganz ausgezeichneten Eigenschaften der erfindungsgemäßen Härter sei insbesondere darauf hingewiesen, daß die Verarbeitungszeiten (Topfzeiten) von Klarlacken, die unter Einsatz der erfindungsgemäßen Härter zugänglich sind, ausgezeichnet ist. Mit Klarlackrezepturen auf Basis der erfindungsgemäßen Härter gemäß Tabelle 1 des Beispielteils der vorliegenden Anmeldung ist ein Klarlackauftrag noch nach 60 Minuten problemlos möglich, wobei ein klarer, farbloser transparenter Lack erhalten wird. Das Ende der Verarbeitungszeit (Topfzeit) ist durch einen deutlichen Viskositätsanstieg der Mischung gekennzeichnet und leicht daran zu erkennen, daß die Viskosität um mehr als das 3-fache gegenüber der Anfangsviskosität ansteigt.

Ein weiterer Erfindungsgegenstand ist die Verwendung der erfindungsgemäßen Härter zur Herstellung von Klarlacken, Beschichtungsmassen und dergleichen.

Zu den Verbindungen (A)

Unter epoxidierten Polyethylenoxiden werden im Rahmen der Erfmdung Verbindungen verstanden, die erhältlich sind, indem man die beiden terminalen OH-Gruppen von Polyethylenoxid in Oxirangruppen überführt, beispielsweise durch Umsetzung mit Epichlorhydrin. Das eingesetzte Polyethylenoxid kann dabei ein mittleres Molgewicht im Bereich von 80 bis 3000 aufweisen; es kann hergestellt werden, indem die Polymerisation des Ethylenoxids auf einem Alkylendiol mit C2-C18 in der dem Fachmann bekannten Weise gestartet wird.

Unter epoxidierten Polypropylenoxiden werden im Rahmen der Erfindung Verbindungen verstanden, die erhältlich sind, indem man die beiden terminalen OH-Gruppen von Polypropylenoxid in Oxirangruppen überführt, beispielsweise durch Umsetzung mit Epichlorhydrin. Das eingesetzte Polypropylenoxid kann dabei ein mittleres Molgewicht im Bereich von 110 bis 3000 aufweisen; es kann hergestellt werden, indem die Polymerisation des Propylenoxids auf einem Alkylendiol mit C2-C18 in der dem Fachmann bekannten Weise gestartet wird.

Unter Polyethylenpropylenoxiden werden im Rahmen der Erfmdung Verbindungen verstanden, die erhältlich sind, indem man die beiden terminalen OH-Gruppen von Polyethylenpropylenoxid in Oxirangruppen überführt, beispielsweise durch Umsetzung mit Epichlorhydrin. Das eingesetzte Polyethylenpropylenoxid kann dabei ein mittleres Molgewicht im Bereich von 80 bis 3000 aufweisen. Unter Polyethylenpropylenoxid werden Verbindungen verstanden, die durch Copolymerisation von Ethylen- und Propylenoxid erhältlich sind, wobei die Polymerisation der beiden Reaktanden gleichzeitig oder blockweise durchgeführt werden kann, indem die Polymerisation des Propylenoxids und/oder des Ethylenoxids auf einem Alkylendiol mit C2-C 18 in der dem Fachmann bekannten Weise gestartet wird.

Die Verbindungen (A) können einzeln oder im Gemisch miteinander eingesetzt werden.

Zu den Verbindungen (B)

Unter Bisphenol-A-Epoxiden werden im Rahmen der Erfmdung wie allgemein üblich Verbindungen verstanden, die erhältlich sind, indem man Bisphenol-A mit Epichlorhydrin umsetzt und/oder dieses durch Weitereaktion mit Bisphenol A polymerisiert. Diese Verbindungen sind daher auch unter der Bezeichnung Bisphenol-A-diglycidylether oder allgemein als Epoxidharze bekannt. Handelsübliche Produkte sind Epikote 828, 1001, 1002, 1003, 1004 u.a. der Firma Shell.
Die Molelulargewichte der eingesetzten Bisphenol-A-epoxide liegen vorzugsweise im Bereich von 300 bis 3000
Unter Bisphenol-F-Epoxiden werden im Rahmen der Erfindung wie allgemein üblich Verbindungen verstanden, die erhältlich sind, indem man Bisphenol-F mit Epichlorhydrin umsetzt und/oder durch weitere Umsetzung mit Bisphenol F polymerisiert. Diese Verbindungen sind daher auch unter der Bezeichnung Bisphenol-F-Diglycidylether oder allgemein als Bisphenol F Epoxidharze bekannt.
Die Molelulargewichte der eingesetzten Bisphenol-F-epoxide liegen vorzugsweise im Bereich von 270 bis 3000.
Die Verbindungen (B) können einzeln oder im Gemisch miteinander eingesetzt werden.

Zu den Verbindungen (C)

**Bisphenol-A** ist dem Fachmann einschlägig bekannt und wird durch folgende Formel charakterisiert:

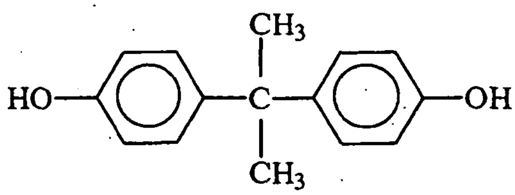

Bisphenol-A

**Bisphenol-F** ist dem Fachmann ebenfalls einschlägig bekannt.
Die Verbindungen (C) können einzeln oder im Gemisch miteinander eingesetzt werden.

Zu den Verbindungen (D)

In einer Ausführungsform werden zur Herstellung des Zwischenproduktes (Z1), das anschließend mit den Polyaminen (E) zum Zwischenprodukt (Z2) umgesetzt wird, neben den Verbindungen (A), (B) und (C) zusätzlich die Verbindungen (D) eingesetzt. Bei den Verbindungen (D) handelt es sich um Verbindungen aus der Gruppe der Triglycidylether von Triolen und der Diglycidylether von Diolen. Als Beispiele geeigneter Diole und Triole, die den Verbindungen (D) zu Grunde liegen, seien genannt: Ethylenglykol, Diethylenglykol, Triethylenglykol, 1,2-Propylenglykol, 1,3-Propylenglykol, 1,4-Butylenglykol, 1,5-Pentandiol, 1,6-Hexandiol, Cyclohexandiol, Cyclohexandimethanol, Neopentylglykol, 1,2,6-Hexantriol, Glycerin und Trimethylolpropan.
Die Verbindungen (D) können einzeln oder im Gemisch miteinander eingesetzt werden.
Der Klarheit halber sei festgestellt: Ein weiterer Erfmdungsgegenstand sind dementsprechend Härter für wasserbasierte Epoxidharzsysteme, wobei diese Härter erhältlich sind, indem man eine Mischung von

(A) mindestens einem epoxidierten Polyalkylenoxid, ausgewählt aus der Gruppe der epoxidierten Polyethylenoxide, der epoxidierten Polypropylenoxide und der Polyethylenpropylenoxide,
(B) mindestens einer epoxidierten aromatischen Hydroxyverbindung ausgewählt aus der Gruppe der Bisphenol-A-Epoxide und der Bisphenol-F-Epoxide,
(C) mindestens einer aromatischen Hydroxyverbindung, ausgewählt aus der Gruppe Bisphenol-A und Bisphenol-F und
(D) mindestens einer Verbindungen, ausgewählt aus der Gruppe der Triglycidylether von Triolen und der Diglycidylether von Diolen
zu einem ersten Zwischenprodukt (Z1) umsetzt, dieses Zwischenprodukt (Z1) anschließend mit einem Polyamin (E) zu einem zweiten Zwischenprodukt (Z2) umsetzt und dieses Zwischenprodukt (Z2) schließlich mit mindestens einer Verbindung (F) umsetzt, mit der Maßgabe, daß die Verbindungen (F) ausgewählt werden aus der Gruppe carbonylhaltigen Verbindungen und der weiteren Maßgabe, daß man mindestens 1 % und höchstens 99% der in dem Zwischenprodukt (Z2) vorhandenen primären Amingruppen abreagieren lässt.

Zu den Verbindungen (E)

Unter den **Polyaminen (E)** werden im Rahmen der vorliegenden Erfindung Amine verstanden, die mindestens zwei primäre Aminogruppen pro Molekül enthalten. Optional können zusätzliche weitere Aminogruppen enthalten sein. Als Verbindungen (E) können aliphatische, aromatische, aliphatisch-aromatische, cycloaliphatische und heterocyclische Di- und Polyamine eingesetzt werden.
Beispiele für geeignete Polyamine (E) sind: Polyethylenamine (Ethylendiamin, Diethylentriamin, Triethylentetramin, Tetraethylenpentamin, usw.), 1,2-Propylendiamin, 1,3-Propylendiamin, 1,4-Butandiamin, 1,5-Pentandiamin, 1,3-Pentandiamin, 1,6-Hexandiamin, 3,3,5-Trimethyl-1,6-hexandiamin, 3,5,5-Trimethyl-1,6-hexandiamin, 2-Methyl-1,5-pentandiamin, Bis(3-aminopropyl)amin, N,N'-Bis(3-aminopropyl)-1,2-ethandiamin, N-(3-aminopropyl)-1,2-ethandiamin, 1,2-diaminocyclohexan, 1,3-Diaminocyclohexan, 1,4-Diaminocyclohexan, die Poly(alkylenoxid)diamine und Triamine (wie z.B. Jeffamine D-230, Jeffamine D-400, Jeffamine D-2000, Jeffamine D-4000, Jeffamine T-403, Jeffamine EDR-148, Jeffamine EDR-192, Jeffamine C-346, Jeffamine ED-600, Jeffamine ED-900, Jeffamine ED-2001), meta-Xylylendiamin, Phenylendiamin, 4,4'-Diaminodiphenylmethan, Toluoldiamin, Isophorondiamin, 3,3'-Dimethyl-4,4'-diaminodicyclohexylmethan, 4,4'-Diaminodicyclohexylmethan, 2,4'-Diaminodicyclohexylmethan, 1,3-Bis(aminomethyl)cyclohexan, die Mischung der über eine Methylenbrücke verknüpften Poly(cyclohexyl-aromischen)amine (auch als MBPCAA bekannt) und Polyaminoamide. Polyethylenamine, insbesondere Diethylentriamin sind besonders bevorzugt.
Die Verbindungen (E) können einzeln oder im Gemisch miteinander eingesetzt werden.
In einer Ausführungsform können die Verbindungen (E) in Kombination mit Aminen (E*) eingesetzt werden. Dabei gilt, dass es sich bei den Aminen (E*) um Amine handelt, die nicht unter die oben genannte Definition der Amine (E) fallen. Beispiele für solche Amine (E*) sind etwa Amine mit nur einer primären Aminogruppe pro Molekü, etwa Cyclohexylamin, Methylamin, Ethylamin, Propylamin, Butylamin, pentylamin, Hexylamin, Heptylamin, Octylamin, Nonylamin, Decylamin, Undecylamin, Dodecylamin, Tridecylamin, Tetradecylamin, Pentadecylamin, Hexadecylamin, Heptadecylamin, Octadecylamin, Anilin, Jeffamin M 2070, Jeffamin M 600 , Ethanolamin.
Sofern Gemische von (E) und (E*) eingesetzt werden, beträgt der Anteil von (E) in diesen Gemischen mindestens 10 Gew.-%, vorzugsweise mindestens 40 Gew.-% und insbesondere mindestens 60 Gew.-%.
In einer bevorzugten Ausführungsform werden ein oder mehrere Verbindungen (E) eingesetzt, jedoch keine Verbindungen (E*).

Zu den Verbindungen (F)

Als **carbonylhaltige Verbindungen** (F) werden im Rahmen der vorliegenden Erfindung Substanzen der allgemeinen Formel (I)

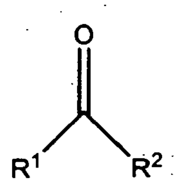

(I)

eingesetzt. In dieser Formel (I) bedeuten die Reste $R^1$ und $R^2$ unabhängig voneinander Wasserstoff, einen gesättigten Alkylrest mit 1 bis 22 C-Atomen, der linear oder verzweigt sein kann oder eine Gruppe $C_6H_5$, OH, $OR^3$, wobei der Rest R3 ein Alkylrest mit 1 bis 22 C-Atomen ist, der gesättigt oder ungesättigt, linear oder verzweigt sein kann.
In einer Ausführungsform gilt für die Substanzen der Formel (I) ferner die zusätzliche Maßgabe, dass, die Reste $R^1$ und $R^2$, sofern sie jeweils die Bedeutung eines gesättigten Alkylrestes mit 1 bis 22 C-Atomen haben, untereinander verbunden (d.h. miteinander verknüpft) sein können, so dass sie zusammen mit dem Carbonyl-Kohlenstoffatom einen Ring bilden. Vorzugsweise ist dabei eine der zur Carbonylgruppe alpha-ständigen $CH_2$-Gruppen durch einen Rest -O- ersetzt, was chemisch bedeutet, dass es sich um ein Lacton handelt - Beispiele hierfür sind etwa gamma-Butyrolacton oder epsilon-Caprolacton.
In einer Ausführungsform gilt für die Substanzen der Formel (I) ferner die zusätzliche Maßgabe, dass, die Reste R1 und R2, sofern sie jeweils die Bedeutung eines gesättigten Alkylrestes mit 1 bis 22 C-Atomen haben, in alpha-Stellung zum Carbonyl-Kohlenstoffatom eine Amino- oder OH-Gruppe als Substituenten tragen können. Beispiele hierfür sind etwa alpha-Hydroxycarbonsäuren oder alpha-Aminocarbonsäuren.
In einer weiteren Ausführungsform gilt für die Substanzen der Formel (I) ferner die zusätzliche Maßgabe, dass

die Reste $R^1$ und $R^2$ gemeinsam Sauerstoff bedeuten können. In diesem Falle handelt es sich bei der Substanz (I) um Kohlendioxid.

Beispiel für geeignete Verbindungen (F) sind etwa Carbonsäuren und deren Anhydride, Carbonsäureester, Aceton, Formaldehyd, Ketone, Carbonate wie z. B. Ethylencarbonat, Propylencarbonat, Kohlendioxid.

Zur Herstellung des Zwischenproduktes (Z1)

In einer Ausführungsform setzt man bei der Herstellung des Zwischenproduktes (Z1) die Verbindungen (A) und (B) in einem molaren Verhältnis von 0,1:1 bis 5:1 ein.

In einer Ausführungsform stellt man bei der Herstellung des Zwischenproduktes (Z1) ein molares Verhältnis der Summe der Verbindungen (A) und (B) (diese Verbindungen enthalten jeweils zwei Oxirangruppen pro Molekül) zu Verbindung C (diese Verbindung enthält zwei OH-Gruppen pro Molekül) im Bereich von 1,1:1 bis 10:1 ein. Dies ist gleichbedeutend damit, daß man das Äquivalentverhältnis von Oxiranringen in der Summe der Verbindungen (A) und (B) zu reaktiven Wasserstoffatomen der Verbindung (C) auf einen Wert im Bereich von 1,1:1 bis 10:1 einstellt.

In einer weiteren Ausführungsform, nämlich in Fällen, wo im Zuge der Herstellung des Zwischenproduktes (Z2) auch mindestens eine Verbindung (D) eingesetzt wird, stellt man bei der Herstellung des Zwischenproduktes (Z1) ein molares Verhältnis der Summe der Verbindungen (A), (B) und (D) (diese Verbindungen enthalten jeweils zwei Oxirangruppen pro Molekül) zu Verbindung C (diese Verbindung enthält zwei OH-Gruppen pro Molekül) im Bereich von 1,1: 1,0 bis 10,0:1,0 ein. Dies ist gleichbedeutend damit, daß man das Äquivalentverhältnis von Oxiranringen in der Summe der Verbindungen (A), (B) und (D) zu reaktiven Wasserstoffatomen der Verbindung (C) auf einen Wert im Bereich von 1,1:1,0 bis 10,0:1,0 einstellt.

Hierzu der Eindeutigkeit halber folgende Erläuterung: Der Ausdruck "Äquivalentverhältnis" ist dem Fachmann geläufig. Der grundlegende Gedanke hinter dem Begriff des Äquivalents ist der, daß man für jede an einer Reaktion beteiligte Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Dabei ist darauf zu achten, daß unter einer reaktiven Gruppe die kleinstmögliche reaktionsfähige Gruppe zu verstehen ist - der Begriff der reaktiven Gruppe ist also nicht deckungsgleich mit dem Begriff der funktionellen Gruppe. Bei H-aciden Verbindungen bedeutet das etwa, daß zwar OH-Gruppen oder NH-Gruppen solche reaktiven Gruppen darstellen, nicht aber $NH_2$-Gruppen, bei denen zwei reaktive H-Atome am selben Stickstoffatom sitzen. Hier werden sinnvollerweise innerhalb der funktionellen Gruppe $NH_2$ die beiden Wasserstoffatome als reaktive Gruppe betrachtet, so daß die funktionelle Gruppe $NH_2$ zwei reaktive Gruppen, nämlich die Wasserstoffatome, aufweist.

In einer Ausführungsform führt man die Herstellung des Zwischenproduktes (Z1) in Gegenwart eines Katalysators durch, insbesondere Triphenylphosphin oder Ethyltriphenylphosphoniumiodid. Dabei beträgt die Menge des Katalysators etwa 0,01 bis 1,0 Gew.-% - bezogen auf die Gesamtmenge der Verbindungen (A), (B) und (C).
Die Epoxidzahl (%EpO) des Zwischenproduktes liegt vorzugsweise unterhalb von 10% EpO, insbesondere unterhalb von < 5% EpO. Die Definition der Epoxidzahl und die Einzelheiten der analytischen Bestimmung können dem Beispielteil dieser Anmeldung entnommen werden.

Zur Herstellung des Zwischenproduktes (Z2)

Zur Herstellung des Zwischenproduktes (Z2) wird wie schon gesagt das Zwischenprodukt (Z1) mit einem Polyamin (E) umgesetzt.

In einer Ausführungsform setzt man das Zwischenprodukt (Z1) und das Polyamin (E) in solchen Mengen ein, daß das Äquivalentverhältnis der reaktiven H-Atome an den Aminostickstoffatomen von (E) zu den Oxirangruppen in der Zwischenverbindung (Z1) im Bereich von 4:1 bis 100:1 liegt und gleichzeitig das Verhältnis der Oxirangruppen zu primären Aminen mindestens 1 : 1,01 beträgt..

Die Umsetzung des Zwischenproduktes (Z1) mit dem Polyamin wird vorzugsweise so durchgeführt, daß das Polyamin im Überschuss vorgelegt wird, so dass sichergestellt ist, dass im wesentlichen 1 Molekül des Polyamins, vorzugsweise Diethylentriamin, mit jeweils einer der Epoxidgruppen der Zwischenverbindung (Z1) reagiert. Überschüssiges Amin kann abdestilliert werden um den Gehalt an freiem Amin möglichst niedrig zu halten.

Zur Herstellung des erfmdungsgemäßen Härters

Zur Herstellung des erfindungsgemäßen Härters wird das Zwischenprodukt (Z2) mit mindestens einer Verbindung (F) umgesetzt und zwar mit der Maßgabe, dass man mindestens 1% und höchstens 99% der in dem Zwischenprodukt (Z2) vorhandenen primären Amingruppen abreagieren lässt.
In einer bevorzugten Ausführungsform gilt die Maßgabe, dass man mindestens 25% und höchstens 75% der in dem

Zwischenprodukt (Z2) vorhandenen primären Amingruppen abreagieren lässt.
In einer besonders bevorzugten Ausführungsform gilt die Maßgabe, dass man mindestens 40% und höchstens 60% der in dem Zwischenprodukt (Z2) vorhandenen primären Amingruppen abreagieren lässt.

Herstellung von Beschichtungsmassen

Ein weiterer Gegenstand der Erfindung ist ein Verfahren zur Herstellung von Klarlacken, Beschichtungsmassen und dergleichen, die erhältlich sind, indem man die oben genannten erfindungsgemäßen Härter in wässrigem Milieu unter Rühren mit Epoxidverbindungen (G) zusammengibt und umsetzt.

Bei den Epoxidverbindungen (G) handelt es sich um Polyepoxide mit im Mittel mindestens zwei terminalen oder lateralen Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyl- oder Arylsubstituenten, Ethergruppierungen und ähnliche. Vorzugsweise handelt es sich bei diesen Epoxidverbindungen um Polyglycidylether auf der Basis von mehrwertigen, vorzugsweise zweiwertigen Alkoholen, Phenolen Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 160 und 3200, insbesondere zwischen 170 und 830. Das Epoxidäquivalentgewicht einer Substanz ist dabei als diejenige Menge der Substanz (in Gramm) definiert, welche 1 mol Oxiranringe enthält.

Als mehrwertige Phenole kommen vorzugsweise folgende Verbindungen in Frage:

Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt.

Auch die Polyglycidylether von mehrwertigen Alkoholen sind als Verbindungen (G) geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin und Bis-(4-hydroxycyclohexyl)-2,2-propan genannt.

Es können auch Polyglycidylether von Polycarbonsäuren als Verbindungen (G) verwendet werden, die man durch die Umsetzung von Epichlorhydrin oder ähnlichen E-poxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Es können auch Mischungen von mehreren Epoxidverbindungen (G) verwendet werden.

Bei der Herstellung von Beschichtungsmassen, bei der man wie oben gesagt die erfindungsgemäßen Härter in wässrigem Milieu mit Epoxidverbindungen (G) umsetzt, können im übrigen zusätzlich dem Fachmann einschlägig bekannte Zusatzstoffe und/oder Verarbeitungshilfsmittel eingesetzt werden. Beispiele hierfür sind Pigmente, Zement, Kies, Entlüfter, Entschäumer, Dispergierhilfsmittel, Antiabsetzmittel, Beschleuniger, freie Amine, Verlaufsadditive, Leitfähigkeitsverbesserer.

Bezüglich der Schichtdicke der Beschichtungsmassen gilt, dass die erfindungsgemäßen Härter in Überzugsmassen für Schichtdicken von 0,01 bis 10 mm genutzt werden können, vorzugsweise für Schichtdicken von 0,05 bis 3 mm.

Im übrigen gilt, dass die durch den Einsatz der erfindungsgemäß einzusetzenden Härter erzielte äußerst geringe Schrumpfungsneigung der ausgehärteten Massen tendenziell noch dadurch verstärkt werden kann, dass man einen hohen Pigmentgehalt einstellt.

Ein weiterer Gegenstand der Erfindung sind die ausgehärteten Massen, die erhältlich sind, indem man die oben genannten erfindungsgemäßen Härter in wässrigem Milieu mit Epoxidverbindungen (G) umsetzt und anschließend aushärten lässt.

In einer Ausführungsform handelt es sich bei den ausgehärteten Massen um Fußbodenbeschichtungen. In einer bevorzugten Ausführungsform weisen diese Fußbodenbeschichtungen mit einer Schichtdicke von mehr als 0,4 mm einen Längsschrumpf von weniger als 3% auf (gemessen bei 23 °C und einer relativen Luftfeuchtigkeit von 50%).

**Beispiele**

**Meßmethoden**

**Epoxidzahl (%EpO)**

Zur Charakterisierung des Gehalts von Verbindungen an Oxirangruppen ("Epoxidgruppen") wurde eine Epoxidtitration durchgeführt. Die dabei erhaltene Epoxidzahl (%EpO) gibt an, wie viel Gramm Oxiran-Sauerstoff in 100 Gramm einer Probe enthalten sind.

Der Titration liegt folgendes Prinzip zu Grunde: Man fügt eine Lösung mit überschüssigem Tetraethylammoniumbromid zur Probe, die Oxiranringe enthält. Danach titriert man die Mischung mit einer Lösung von Perchlorsäure in Eisessig, wobei eine äquimolare Menge Bromwasserstoff freigesetzt wird. Der Bromwasserstoff reagiert unter Ringöffnung mit den Oxiranringen und bildet das entsprechende Bromhydrin.

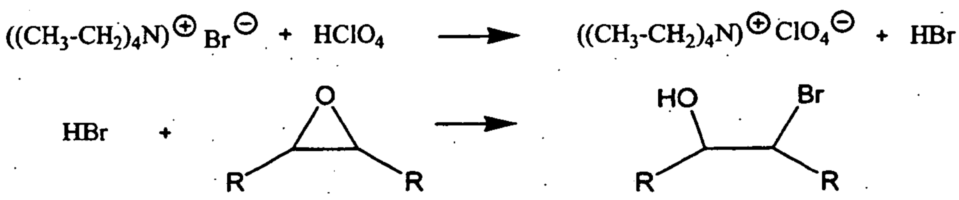

Als Indikator setzt man Kristallviolett ein. Die Bestimmung setzt die Abwesenheit von Wasser, Basen und Aminen voraus.

Es kamen folgende Reagentien zum Einsatz: (1) 0,1-N-Perchlorsäure (Fa. Merck) in Eisessig; (2) Tetraethylammoniumbromid (Fa. Fluka) in Form einer Lösung von 100 g Tetraethylammoniumbromid in 400 ml Eisessig; (3) Kristallviolett (Fa. Merck); zur Herstellung der Indikatorlösung wurden 0,2 g Kristallviolett in 100 ml Eisessig gelöst.

Durchführung: 0,2 bis 0,5 g der Probe, die Oxiranringe enthält werden in einem Erlenmeyerkolben vorgelegt. Die Probe wird in 50 ml wasserfreiem Aceton gelöst. Dann fügt man 10 ml Tetraethylammoniumbromidlösung (siehe oben) und 3 Tropfen Kristallviolettlösung (siehe oben) hinzu. Die Mischung wird mit einer 0,1-N Lösung von Perchlorsäure in Eisessig titriert. Der Endpunkt ist erreicht, sobald die Farbe sich von blau nach grün ändert.

Vor Durchführung der eigentlichen Titration führt man eine Blindprobe durch (diese enthält keine Oxiranverbindung), um Meßfehler auszuschließen.

Auswertung: Der Epoxidgehalt %EpO wird wie folgt berechnet:

$$\%\ EpO = [(a - b) * 0{,}160] / E$$

a : = Milliliter 0,1 n $HClO_4$ Lösung, die zur Titration benötigt wird

b := Milliliter 0,1 n $HClO_4$ Lösung, die im Blindversuch benötigt wird

E : = Einwaage der Probe in Gramm

**Epoxidäquivalentgewicht (EEW)**

Das Epoxyäquivalentgewicht (EEW) kann aus der Epoxidzahl wie folgt berechnet werden:

$$16 * 100 / \%\ EpO = EEW$$

Die Dimension des EEW ist g/äq.

**Abkürzungen**

Im Folgenden bedeuten:

- EEW das Epoxidäquivalentgewicht (wie oben beschrieben).
- MW das mittlere Molekulargewicht

**Beispiel 1**

44g Poly(propylenglycol)-diglycidylether (EEW: 326, MW: 652) wurden bei Raumtemperatur mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 3h gerührt, bis der Epoxidwert 3,85% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2h auf 160°C erhitzt. Der Überschuss an Diethylentriamin wurde im Vakuum (bis 200°C Sumpftemperatur und kleiner 10 mbar) abdestilliert, bis kein freies Amin mehr überdestillierte. Die Mischung wurde anschließend auf 80°C abgekühlt und 13,7g Propylencarbonat unter Berücksichtigung der Exothermie zugetropft. Nach weiteren 4h Reaktionszeit bei 160°C wurde die Reaktionsmischung unter gutem Rühren mit 98,9g Wasser versetzt. Es wurden 247,5g einer klaren bernsteinfarbigen Flüssigkeit erhalten. Viskosität (Brookfield, 10Upm, 40°C) : 1220 mPas.

**Beispiel 2**

44g Poly(propylenglycol)-diglycidylether (EEW: 326, MW: 652) wurden bei Raumtemperatur mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 3h gerührt, bis der Epoxidwert 3,85% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2h auf 160°C erhitzt. Der Überschuss an Diethylentriamin wurde im Vakuum (bis 200°C Sumpftemperatur und kleiner 10 mbar) abdestilliert, bis kein freies Amin mehr überdestillierte. Die Mischung wurde anschließend auf 80°C abgekühlt und 11,6g Butyrolacton unter Berücksichtigung der Exothermie zugetropft. Nach weiteren 2h Reaktionszeit bei 90°C wurde die Reaktionsmischung unter gutem Rühren mit 97,5g Wasser versetzt. Es wurden 243,7g einer klaren bernsteinfarbigen Flüssigkeit erhalten. Viskosität (Brookfield, 10Upm, 40°C) : 1440 mPas.

**Beispiel 3**

44g Poly(propylenglycol)-diglycidylether (EEW: 326, MW: 652) wurden bei Raumtemperatur mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 3h gerührt, bis der Epoxidwert 3,85% beträgt. Anschließend wurde auf 60°C abgekühlt und bei dieser Temperatur 121,4g Diethylentriamin hinzugefügt. Nach Abklingen der Exothermie wurde die Reaktionsmischung erneut für 2h auf 160°C erhitzt. Der Überschuss an Diethylentriamin wurde im Vakuum (bis 200°C Sumpftemperatur und kleiner 10 mbar) abdestilliert, bis kein freies Amin mehr überdestillierte. Die Mischung wurde anschließend auf 90°C abgekühlt und unter gutem Rühren mit 89,5g Wasser versetzt. Anschließend wurde auf 50°C abgekühlt und langsam über einen Zeitraum von 1h 1,9g Kohlendioxid durch ein Gasverteilungsrohr mit Fritte D2 eingeleitet. Das aufgenommene Kohlendioxid wurde durch Rückwägung der gesamten Apparatur ermittelt. Es wurden 226g einer klaren bernsteinfarbigen Flüssigkeit erhalten. Viskosität (Brookfield, 10Upm, 40°C) : 2020 mPas.

**Vergleichsbeispiel 1**

44g Poly(propylenglycol)-diglycidylether (EEW: 326, MW: 652) wurden bei Raumtemperatur mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 2h gerührt, bis der Epoxidwert 3,95% betrug. Anschließend wurde auf 60°C abgekühlt und bei dieser Temperatur 91,1g Diethylentriamin hinzugefügt. Nach Abklingen der Exothermie wurde die Reaktionsmischung erneut für 2h auf 160°C erhitzt. Der Überschuss an Diethylentriamin wurde im Vakuum (bis 200°C Sumpftemperatur und kleiner 10 mbar) abdestilliert, bis kein freies Amin mehr überdestillierte. Die Mischung wurde anschließend auf 90°C abgekühlt und unter gutem Rühren mit 89,5g Wasser versetzt. Es wurden 205,6g einer klaren bernsteinfarbigen Flüssigkeit erhalten. Viskosität (Brookfield, 10Upm, 40°C) : 2140 mPas. Aminzahl: 134.

## Anwendungstechnische Prüfungen

### 1. Klarlackeigenschaften

Die Härter gemäß den Beispielen 1 bis 3 (Härter 60%ig in Wasser) und gemäß dem Vergleichsbeispiel 1 (Härter 60%ig in Wasser) wurden durch Mischen der in Tabelle 1 angegebenen Mengen der Komponenten Nr. 1 bis 3 (die Nummerierung der eingesetzten Komponenten Nr. 1 bis 3 ist der ersten Spalte der Tabelle 1 zu entnehmen) zu einem Klarlack formuliert.

Hierzu wurden die Komponenten Nr. 1 (Epoxidharz) und Nr. 2 (Härter 60%ig in Wasser) unter manuellem Rühren mit einem Holzspatel in einem Becherglas mit der Komponente 3 (Wasser) innig vermengt bis eine homogene Emulsion entstanden war. Die Emulsion wurde anschließend mit einem Rakel (0,1 mm) auf einer Glasscheibe aufgetragen und bei 20 Grad Celsius aushärten gelassen. Nach einem und nach sieben Tagen wurde jeweils die Pendelhärte nach König (DIN 53157) mit einem Pendelhärte-Meßgerät (Typ 299, Erichsen) bestimmt.

In allen Fällen war ein Ende der Verarbeitungszeit durch einen deutlichen Anstieg der Viskosität der Emulsion auf den mehr als 3-fachen Wert der Anfangsviskosität erkennbar. Die Verarbeitungszeit betrug ca. 60 Minuten in allen Fällen. Die erhaltenen Lacke waren klar und farblos. Die Tack-free Zeit (Zeit nach der kleine Glaskugeln oder Glasstaub nicht mehr auf dem Film haften) betrug in allen Fällen ca. 1 Stunde.

**Tabelle 1: Klarlack-Formulierungen**

| Nr. | Eigenschaften/Versuch | **B1** | **B2** | **B3** | **V1** |
|---|---|---|---|---|---|
| | Lack: | | | | |
| 1 | Chemres E30 (g) | 10 | 10 | 10 | 10 |
| **2** | **Härter** 60%ig in Wasser (g) | 16,9 | 17,1 | 12,3 | 11,7 |
| 3 | Wasser (g) | 11,0 | 15,0 | 11,0 | 9,7 |
| | | | | | |
| | Pendelhärte n. König, nach 1 Tag (0,1 mm Film) | 170 | 163 | 135 | 160 |
| | Pendelhärte n. König, nach 7 Tagen (0,1 mm Film) | 171 | 194 | 162 | 179 |
| | Topfzeit [min.] | 68 | 59 | 60 | 48 |

Die Angaben B1, B2 usw. in der obersten Zeile der Tabelle 1 sind wie folgt zu verstehen:

- B1 bedeutet, dass die Klarlackformulierung gemäß Spalte B 1 als Komponente Nr. 2 (Härter) die Verbindung gemäß Beispiel 1 enthielt.
- B2 bedeutet, dass die Klarlackformulierung gemäß Spalte B2 als Komponente Nr. 2 (Härter) die Verbindung gemäß Beispiel 2 enthielt.
- B3 bedeutet, dass die Klarlackformulierung gemäß Spalte B3 als Komponente Nr. 2 (Härter) die Verbindung gemäß Beispiel 3 enthielt.
- V1 bedeutet, dass die Klarlackformulierung gemäß Spalte V1 als Komponente Nr. 2 (Härter) die Verbindung gemäß Vergleichsbeispiel 1 enthielt.
  Die Angaben in den Spalten B1, B2 usw. sind in Bezug auf die eingesetzten Komponenten Mengenangaben in Gramm.
  Die Topfzeit der aushärtenden Mischung wurde durch kontinuierliche Viskositätsmessung in einem auf 20°C temperierten Gefäß mittels Brookfield DV II, Spindel RV 7, bei 20 Upm bestimmt. Dabei wurde das Ende der Verarbeitungszeit bei einer Viskosität von 20000 mPas festgelegt.

### 2. Fußbodenüberzugsmasse zur Ermittlung des Schrumpfwertes

Die Härter gemäß den Beispielen 1 bis 3 (Härter 60%ig in Wasser) und gemäß dem Vergleichsbeispiel 1 (Härter 60%ig in Wasser) wurden entsprechend den in Tabelle 2 angegebenen Mengen mit den flüssigen Komponenten (Komponenten Nr. 6, 7, 8, 9, und 10) versetzt und am Pendraulik-Rührer homogenisiert. Anschließend wurden die Pigmente (Komponenten Nr. 2, 3, 4, 5 und 11) nacheinander homogen eingerührt und ca. 20 Minuten mittels Pendraulik-Rührer dispergiert.
Anschließend wurde die Mischung mit den Komponenten Nr. 12 und Nr. 13 versetzt und ca. 4 Minuten mittels Pendraulik-Rührer homogenisiert.
Die Numerierung der in den Rezepturen eingesetzten Komponenten Nr. 1 bis Nr. 13 ist der ersten Spalte der Tabelle 2 zu entnehmen.
Als Komponente 6 wurde Foammaster 223 eingesetzt. Dabei handelt es sich um einen Entschäumer (Fa. Cognis).
Als Komponente 7 wurde Loxanol DPN eingesetzt. Dabei handelt es sich um einen Offenzeitverlängerer (Fa. Cognis).
Als Komponente 8 wurde Dowanol TPM eingesetzt. Dabei handelt es sich um ein Hilfslösemittel (Fa. Cognis).
Als Komponente 9 wurde DSX 1550 eingesetzt. Dabei handelt es sich um ein Verdickungsmittel (Fa. Cognis).
Als Komponente 12 wurde Chemres E95 eingesetzt. Dabei handelt es sich um Epoxidharz (Fa. Cognis).

In sämtlichen Fällen wurde ein konstantes Verhältnis Füllstoff zu Bindemittel von 4,2 : 1 eingestellt. Die so erhaltene Fußbodenbeschichtungsformulierung wurde zur Messung des Längenschrumpfes in eine vorgefertigten Teflonform (Länge: 150mm, Breite: 20mm, Tiefe 3mm) gegossen und bei 23°C und 50% rel. Luftfeuchte im Klimaschrank aushärten gelassen. Der Längenschrumpf wurde mittels einer Schieblehre nach 7, nach 14 und nach 28 Tagen bestimmt und in %-Abnahme bezogen auf die ursprüngliche Länge von 150 mm angegeben.

**Tabelle 2: Schrumpfwert von Fußbodenüberzugsmassen**

| Nr. | Bestandteile / Beispiel | **B1** | **B2** | **B3** | **V1** |
|---|---|---|---|---|---|
| **1** | **Härter** 60%ig in Wasser | 27,5 | 27,7 | 23,1 | 22,4 |
| 2 | Heucosin-Grau G 1978 | 9,5 | 9,5 | 9,5 | 9,5 |
| 3 | Schwerspat C 14 | 16,3 | 16,3 | 16,3 | 16,3 |
| 4 | Minex S20 | 16,3 | 16,3 | 16,3 | 16,3 |
| 5 | Bentone EW | 2 | 2 | 2 | 2 |
| 6 | Foammaster 223 | 0,3 | 0,3 | 0,3 | 0,3 |
| 7 | Loxanol DPIV | 0,6 | 0,6 | 0,6 | 0,6 |
| 8 | Dowanol TPM | 0,6 | 0,6 | 0,6 | 0,6 |
| 9 | DSX 1550 | 0,3 | 0,3 | 0,3 | 0,3 |
| 10 | Wasser | 10 | 10 | 10 | 10 |
| | **Summe Base-Paint** | **83,4** | **83,6** | **79,0** | **78,3** |
| | | | | | |
| 11 | Quarzsand | 100 | 100 | 100 | 100 |
| | **Summe** | **183,4** | **183,6** | **179,0** | **178,3** |
| | | | | | |
| 12 | Chemres E95 (EEW:190) | 17,3 | 17,2 | 20,0 | 20,4 |
| 13 | Wasser | 8,2 | 8,2 | 10,1 | 10,2 |
| | **Gesamtsumme** | **209,0** | **209,0** | **209,0** | **208,9** |
| | | | | | |
| | % Wasser in der Rezeptur | 14 | 14 | 14 | 14 |
| | Summe Füllstoffe (Nr. 2,3,4,5) | 142,2 | 142,2 | 142,2 | 142,2 |
| | Summe Bindemittel (Summe aus Nr. 1 ohne Wasser und Nr. 12) | 33,8 | 33,8 | 33,8 | 33,8 |
| | Verhältnis von Füllstoff : Bindemittel | 4,2 | 4,2 | 4,2 | 4,2 |
| | | | | | |
| | Schrumpf nach 7 Tagen (%) | 1,00 | 0,40 | 0,78 | 0,40 |
| | Schrumpf nach 14 Tagen (%) | - | 1,26 | 0,70 | 0,53 |
| | Schrumpf nach 28 Tagen (%) | 1,30 | 1,26 | 0,78 | 0,53 |

Die Angaben B1, B2 usw. in der oberen Zeile der Tabelle 1 sind analog zum Gebrauch bei Tabelle 1 zu verstehen:

- B1 bedeutet, dass die Klarlackformulierung gemäß Spalte B 1 als Komponente Nr. 1 (Härter) die Verbindung gemäß Beispiel 1 enthielt. B2 bedeutet, dass die Klarlackformulierung gemäß Spalte B2 als Komponente Nr. 1 (Härter) die Verbindung gemäß Beispiel 2 enthielt. Usw.

Die Angaben in den Spalten B1, B2 usw. sind in Bezug auf die eingesetzten Komponenten und den Bilanzierungszeilen ("Summe Base Paint", "Summe" und "Gesamtsumme") Mengenangaben in Gramm.

## Patentansprüche

1. Härter für wasserbasierte Epoxidharzsysteme, wobei diese Härter erhältlich sind, indem man eine Mischung von

   (A) mindestens einem epoxidierten Polyalkylenoxid, ausgewählt aus der Gruppe der epoxidierten Polyethylenoxide, der epoxidierten Polypropylenoxide und der Polyethylenpropylenoxide,
   (B) mindestens einer epoxidierten aromatischen Hydroxyverbindung ausgewählt aus der Gruppe der Bisphenol-A-Epoxide und der Bisphenol-F-Epoxide und
   (C) mindestens einer aromatischen Hydroxyverbindung, ausgewählt aus der Gruppe Bisphenol-A und Bisphenol-F

   zu einem ersten Zwischenprodukt (Z1) umsetzt, dieses Zwischenprodukt (Z1) anschließend mit einem Polyamin (E), wobei dieses Polyamin mindestens zwei primäre Aminogruppen pro Molekül enthält, zu einem zweiten Zwischenprodukt (Z2) umsetzt und dieses Zwischenprodukt (Z2) schließlich mit mindestens einer Verbindung (F) umsetzt, mit der Maßgabe, dass die Verbindungen (F) ausgewählt werden aus der Gruppe der carbonylhaltigen Verbindungen der allgemeinen Formel (I)

   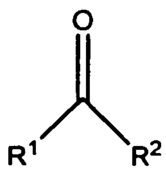

   (I)

   worin die Reste $R^1$ und $R^2$ unabhängig voneinander Wasserstoff, einen gesättigten Alkylrest mit 1 bis 22 C-Atomen, der linear oder verzweigt sein kann oder eine Gruppe $C_6H_5$, OH. $OR^3$, wobei der Rest $R^3$ ein Alkylrest mit 1 bis 22 C-Atomen ist, der gesättigt oder ungesättigt, linear oder verzweigt sein kann, bedeuten und der weiteren Maßgabe, dass man mindestens 1% und höchstens 99% der in dem Zwischenprodukt (Z2) vorhandenen primären Amingruppen abreagieren lässt.

2. Härter nach Anspruch 1, wobei für die Substanzen der Formel (I) die zusätzliche Maßgabe gilt, dass, die Reste $R^1$ und $R^2$, sofern sie jeweils die Bedeutung eines gesättigten Alkylrestes mit 1 bis 22 C-Atomen haben, untereinander verbunden sind, so dass sie zusammen mit dem Carbonyl-Kohlenstoffatom einen Ring bilden

3. Härter nach Anspruch 2, wobei eine der zur Carbonylgruppe alpha-ständigen $CH_2$-Gruppen durch einen Rest -O- ersetzt ist.

4. Härter nach Anspruch 1, wobei für die Substanzen der Formel (I) die zusätzliche Maßgabe gilt, dass die Reste $R^1$ und $R^2$, sofern sie jeweils die Bedeutung eines gesättigten Alkylrestes mit 1 bis 22 C-Atomen haben, in alpha-Stellung zum Carbonyl-Kohlenstoffatom eine Amino- oder OH-Gruppe als Substituenten tragen.

5. Härter nach Anspruch 1, wobei für die Substanzen der Formel (I) die zusätzliche Maßgabe gilt, dass die Reste $R^1$ und $R^2$ gemeinsam Sauerstoff bedeuten.

6. Härter nach einem der Ansprüche 1 bis 5, wobei man als Polyamin (E) Diethylentriamin einsetzt.

7. Härter nach einem der Ansprüche 1 bis 6, wobei man als Verbindungen (A) epoxidierte Polypropylenoxide einsetzt.

8. Härter nach einem der Ansprüche 1 bis 7, wobei man als Verbindungen (B) Bisphenol-A-Epoxide einsetzt.

9. Härter nach einem der Ansprüche 1 bis 8, wobei man als Verbindung (C) Bisphenol-A einsetzt.

10. Härter nach einem der Ansprüche 1 bis 9, wobei man bei der Umsetzung von (Z2) mit (F) mindestens 10% und höchstens 60% der in dem Zwischenprodukt (Z2) vorhandenen primären Amingruppen abreagieren lässt.

11. Verwendung der Härter gemäß einem der Ansprüche 1 bis 10 zur Herstellung von Klarlacken, Beschichtungsmassen und dergleichen.

12. Verfahren zur Herstellung von Klarlacken, Beschichtungsmassen und dergleichen, die erhältlich sind, indem man die Härter gemäß einem der Ansprüche 1 bis 10 in wässrigem Milieu mit Epoxidverbindungen (F) umsetzt.

13. Ausgehärtete Massen, erhältlich durch das Verfahren gemäß Anspruch 12.

14. Ausgehärtete Massen nach Anspruch 13, wobei es sich um Fußbodenbeschichtungen handelt.

15. Fußbodenbeschichtungen nach Anspruch 14, wobei diese Fußbodenbeschichtungen bei einer Schichtdicke von mehr als 0,4 mm einen Längsschrumpf von weniger als 3% aufweisen (gemessen bei 23 °C und einer relativen Luftfeuchtigkeit von 50%).

## Claims

1. Curing agents for water-based epoxy resin systems, these curing agents being obtainable by reacting a mixture of

(A) at least one epoxidized polyalkylene oxide selected from the group consisting of epoxidized polyethylene oxides, epoxidized polypropylene oxides and polyethylene-propylene oxides,
(B) at least one epoxidized aromatic hydroxy compound selected from the group consisting of bisphenol A epoxides and bisphenol F epoxides and
(C) at least one aromatic hydroxy compound selected from the group consisting of bisphenol A and bisphenol F to give a first intermediate (Z1), subsequently reacting this intermediate (Z1) with a polyamine (E), this polyamine containing at least two primary amino groups per molecule, to give a second intermediate (Z2), and finally reacting this intermediate (Z2) with at least one compound (F), with the proviso that the compounds (F) are selected from the group of carbonyl-containing compounds of the general formula (I)

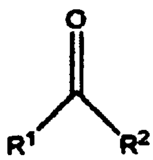

(I)

in which the radicals $R^1$ and $R^2$ independently of one another are hydrogen, a saturated alkyl radical having 1 to 22 C atoms, which may be linear or branched, or a group $C_6H_5$, OH, $OR^3$, where the radical $R^3$ is an alkyl radical having 1 to 22 C atoms, which may be saturated or unsaturated, linear or branched, and with the further proviso that at least 1% and not more than 99% of the primary amine groups present in the intermediate (Z2) are caused to be consumed by reaction.

2. Curing agents according to Claim 1, the substances of the formula (I) being governed by the additional proviso that the radicals $R^1$ and $R^2$, where they each have the definition of a saturated alkyl radical having 1 to 22 C atoms, are joined to one another, and so together with the carbonyl carbon atom form a ring.

3. Curing agents according to Claim 2, one of the $CH_2$ groups positioned alpha to the carbonyl group being replaced

by a radical -O-.

4. Curing agents according to Claim 1, the substances of the formula (I) being governed by the additional proviso that the radicals $R^1$ and $R^2$, where they each have the definition of a saturated alkyl radical having 1 to 22 C atoms, carry an amino or OH group as substituent in the position alpha to the carbonyl carbon atom.

5. Curing agents according to Claim 1, the substances of the formula (I) being governed by the additional proviso that the radicals $R^1$ and $R^2$ together are oxygen.

6. Curing agents according to any of Claims 1 to 5, where diethylenetriamine is used as polyamine (E).

7. Curing agents according to any of Claims 1 to 6, where epoxidized polypropylene oxides are used as compounds (A).

8. Curing agents according to any of Claims 1 to 7, where bisphenol A epoxides are used as compounds (B).

9. Curing agents according to any of Claims 1 to 8, where bisphenol A is used as compound (C).

10. Curing agents according to any of Claims 1 to 9, where, during the reaction of (Z2) with (F), at least 10% and not more than 60% of the primary amine groups present in the intermediate (Z2) are caused to be consumed by reaction.

11. Use of the curing agents according to any of Claims 1 to 10 for preparing transparent varnishes, coating materials and the like.

12. Process for preparing transparent varnishes, coating materials and the like, which are obtainable by reacting the curing agents according to any of Claims 1 to 10 in an aqueous medium with epoxide compounds (F).

13. Cured compositions obtainable by the process according to Claim 12.

14. Cured compositions according to Claim 13, being floor coatings.

15. Floor coatings according to Claim 14, these floor coatings exhibiting a longitudinal contraction of less than 3% (measured at 23°C and a relative humidity of 50%) for a coat thickness of more than 0.4 mm.

## Revendications

1. Durcisseur pour systèmes de résines époxy à base aqueuse, ces durcisseurs pouvant être obtenus par mise en réaction d'un mélange de

   (A) au moins un polyoxyalkylène époxydé, choisi dans le groupe des polyoxyéthylènes époxydés, des polyoxypropylènes époxydés et des polyoxyéthylène-oxypropylènes,
   (B) au moins un composé hydroxylé aromatique époxydé, choisi dans le groupe des bisphénol-A-époxydes de et des de bisphénol-F-époxydes et
   (C) au moins un composé hydroxylé aromatique, choisi dans le groupe constitué par le bisphénol A et le bisphénol F
   pour l'obtention d'un premier produit intermédiaire (Z1), ensuite mise en réaction de ce produit intermédiaire (Z1) avec une polyamine (E), cette polyamine contenant au moins deux groupes amino primaires par molécule, pour l'obtention d'un second produit intermédiaire (Z2), et enfin mise en réaction de ce produit intermédiaire (Z2) avec au moins un composé (F), avec la condition que les composés (F) sont choisis dans le groupe des composés contenant un groupe carbonyle, de formule générale (I)

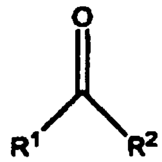

(I)

dans laquelle $R^1$ et $R^2$ représentent, indépendamment l'un de l'autre, un atome d'hydrogène, un radical alkyle saturé ayant de 1 à 22 atomes de carbone, qui peut être linéaire ou ramifié, ou un groupe $C_6H_5$, OH, $OR^3$, le radical $R^3$ étant un radical alkyle ayant de 1 à 22 atomes de carbone, qui peut être saturé ou insaturé, linéaire ou ramifié, et la condition supplémentaire de laisser réagir au moins 1 % et au maximum 99 % des groupes amino primaires présents dans la produit intermédiaire (Z2).

2. Durcisseur selon la revendication 1, dans lequel aux substances de formule (I) s'applique la condition supplémentaire que les radicaux $R^1$ et $R^2$, s'ils ont chacun la signification d'un radical alkyle saturé ayant de 1 à 22 atomes de carbone, sont liés l'un à l'autre, de manière à former ensemble, avec l'atome de carbone en fonction carbonyle, un cycle.

3. Durcisseur selon la revendication 2, dans lequel l'un des groupes $CH_2$ en position alpha par rapport au groupe carbonyle est remplacé par un radical -O-.

4. Durcisseur selon la revendication 1, dans lequel aux substances de formule (I) s'applique la condition supplémentaire que les radicaux $R^1$ et $R^2$, s'ils ont chacun la signification d'un radical alkyle saturé ayant de 1 à 22 atomes de carbone, portent en position alpha par rapport à l'atome de carbone en fonction carbonyle un groupe OH ou amino en tant que substituant.

5. Durcisseur selon la revendication 1, dans lequel aux substances de formule (I) s'applique la condition supplémentaire que les radicaux $R^1$ et $R^2$ représentent ensemble un atome d'oxygène.

6. Durcisseur selon l'une quelconque des revendications 1 à 5, dans lequel on utilise la diéthylènetriamine en tant que polyamine (E).

7. Durcisseur selon l'une quelconque des revendications 1 à 6, dans lequel on utilise en tant que composés (A) des polyoxypropylènes époxydés.

8. Durcisseur selon l'une quelconque des revendications 1 à 7, dans lequel on utilise en tant que composés (B) des bisphénol-A-époxydes.

9. Durcisseur selon l'une quelconque des revendications 1 à 8, dans lequel on utilise en tant que composé (C) le bisphénol-A.

10. Durcisseur selon l'une quelconque des revendications 1 à 9, dans lequel on fait réagir dans la réaction de (Z2) avec (F) au moins 10 % et au maximum 60 % des groupes amino primaires présents dans le produit intermédiaire (Z2).

11. Utilisation des durcisseurs selon l'une quelconque des revendications 1 à 10, pour la production de vernis, de matières de revêtement et similaires.

12. Procédé pour la production de vernis, de matières de revêtement et similaires, qui peuvent être obtenus par mise en réaction des durcisseurs selon l'une quelconque des revendications 1 à 10, en milieu aqueux, avec des époxydes (F).

13. Matières durcies, pouvant être obtenues par le procédé selon la revendication 12.

14. Matières durcies selon la revendication 13, consistant en des revêtements de sol.

**15.** Revêtements de sol selon la revendication 14, ces revêtements de sol présentant, en une épaisseur de plus de 0,4 mm, un retrait longitudinal de moins de 3 % (mesurée à 23 °C et à une humidité relative de l'air de 50 %).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4608405 A
- WO 9321250 A
- EP 253405 A
- EP 1518875 A